# EUROPÄISCHE PATENTSCHRIFT

(11) **EP 1 011 251 B1**
(45) Veröffentlichungstag und Bekanntmachung des Hinweises auf die Patenterteilung: **23.03.2005**
(21) Anmeldenummer: 99125226.3
(22) Anmeldetag: 17.12.1999
(51) Int. Cl.: H04M 3/51, H04M 3/22, H04M 3/24

(54) **Verfahren zur Fehlerüberprüfung und Auswertung der Meldungen von Mitgliedern eines Operatorservice sowie dazu eingerichtete Vermittlungsstelle**
Method for error checking and evaluation of messages by members of an operator service and corresponding equipped switch
Procédé de vérification d' erreurs et d' evaluation des messages par les membres d'un service d'operateur et commutateur équipé en conséquénce

(30) Priorität: 17.12.1998 DE 19858356
(43) Veröffentlichungstag der Anmeldung: 21.06.2000
(73) Patentinhaber: SIEMENS AKTIENGESELLSCHAFT, 80333 München (DE)
(72) Erfinder: Adli, Wahid, 1220 Wien (AT)

(56) Entgegenhaltungen:
- EP-A- 0 705 017
- EP-A- 0 849 961
- US-A- 4 656 624

## Beschreibung

Die Erfindung bezieht sich auf ein Verfahren zur Überprüfung und Auswertung erkannter Fehler von Meldungen einer Mehrzahl von Teilnehmern eines Kommunikationsnetzes, die Mitglieder eines Operatorservice sind, wobei die Meldungen in einer Punkt-zu-Punkt-Konfiguration bei daueraktiver Schicht 2 von dan Teilnehmern an eine Vermittlungsstelle gesandt werden.

Ebenso bezieht sich die Erfindung auf eine Vermittlungsstelle für ein Telekommunikationsnetz, mit einem Koppelnetz, daran angeschlossenen peripheren Anschlußgruppen für Teilnehmer des Netzes, sowie zumindest einem Koordinationsprozessor, wobei jede periphere Anschlußgruppe einen Gruppenprozessor besitzt.

In Telefonnetzwerken werden sogenannte Operatorservices benötigt, welche ein wesentliches Bindeglied zwischen den Kunden des Netzwerkes und den Netzbetreibern darstellen. Die Aufgaben eines solchen Operatorservice sind vielfältig, wobei eine Hauptaufgabe darin liegt, den Teilnehmern auf Anfrage Auskünfte zu erteilen. Beispielsweise kann ein Teilnehmer ein Operatorservice in einem ISDN-Netz anrufen und eine Auskunft erbitten. Der zuständige Operator kann nun, falls notwendig, z.B. auf eine Datenbank zugreifen, wobei ihm sodann eine Information bezüglich eines anderen Teilnehmers auf einem Bildschirm vorliegt. Nach einem Verbindungswunsch des Operators, der z.B. durch Tastendruck erfolgen kann, wird der Operator mit dem gesuchten Teilnehmer verbunden. Der Operator ist nun sowohl mit dem Ursprungsteilnehmer, als auch mit dem gesuchten Teilnehmer verbunden und kann wahlweise mit einem der Teilnehmer sprechen. Wieder auf weiteren Tastendruck erfolgt eine Signalisierung auf dem D-Kanal, und nun werden die Anschlußlagen beider Teilnehmer der peripheren Anschlußgruppe bekanntgeben, und die Verbindung der Sprachkanäle erfolgt über das Koppelnetz, so daß letztlich eine direkte Verbindung zwischen den beiden Teilnehmern vorliegt. Das soeben beschriebene Beispiel soll nur eine der Möglichkeiten bzw. Aufgaben eines Operatorservice darstellen.

Große Netze mit vielen Teilnehmern erfordern entsprechend große Operatorservice-Systeme mit vielen, meist hierarchisch strukturierten Systemteilnehmern (Operatoren), wie beispielsweise bei dem ADMOSS genannten System der Anmelderin. Meldungen der Operatoren zu einer Vermittlungsstelle erfolgen, wie bereits erwähnt, bei einem ISDN-Netz im D-Kanal, und zwar in einer Punkt-zu-Punkt-Konfiguration bei daueraktiver Schicht 2 des OSI Schichtenmodells. Die Meldungen erfolgen in einem ISDN-Netz durch das D-Kanal Protokoll gestützt, wozu auch das Blue Book, Volume VI - Fascicle VI. 11, "Digital Subscribe Signalling System No. 1 (DSS1), Network Layer, User-Network Management", Recommendations Q. 930 - Q. 940, insbesondere auf Recommendation Q. 931 verwiesen wird.

Ein weiteres Konzept ist aus der Patentschrift EP-A-0 849 961 bekannt.

Das der Erfindung zugrunde liegende Problem ist nun folgendes: Es können Betriebszustände durch Softwarefehler, unbeabsichtigte Fehlbedienung oder durch Manipulation, z.B. durch Hacker, auftreten, in denen falsche Meldungen oder eine Flut falscher oder auch richtiger Meldungen von einem, insbesondere aber auch mehreren Operatorplätzen an eine Vermittlungsstelle gesandt werden. Insbesondere ist auch der Fall zu beachten, bei dem mehrere Operatoren räumlich konzentriert arbeiten, was einerseits dazu führt, daß alle diese Operatoren als Teilnehmer an ein und derselben Anschlußgruppe liegen und daß ein Software- oder auch anderer Fehler bei allen diesen Teilnehmern gleichzeitig möglich ist. Dies kann zu einer Überlast sowohl in dem Operatorsystem als auch in der Vermittlungsstelle führen, bis hin zu einem völligen Zusammenbruch des Gesamtsystems.

Eine Aufgabe der Erfindung liegt daher darin, ein Verfahren zu schaffen, das bei Erkennen gefährlicher Betriebszustände geeignete Gegenmaßnahmen ergreift, und das auch eine Vielzahl von Indikatoren auf gefährliche Betriebszustände untersucht.

Diese Aufgabe wird, ausgehend von einem Verfahren der eingangs genannten Art, erfindungsgemäß dadurch gelöst, daß bei Erkennen fehlerhafter Meldungen die zugehörige Data-Link-Verbindung abgebaut und ein erster Zähler hochgezählt wird, bei Erreichen eines vorgebbaren Grenzwertes des ersten Zählers ein erzwungenes Ausloggen des Teilnehmers durchgeführt, und eine Fehlermeldung abgegeben wird, falls die Anzahl der erzwungenen Ausloggvorgänge innerhalb einer bestimmten Zeitspanne ein vorgebbares Maß überschreitet.

Die Erfindung sieht daher bei Erkennen von Fehlerzuständen als Abwehrmaßnahme das Ausloggen des Teilnehmers bzw. mehrerer Teilnehmer vor, gibt jedoch erst dann eine Fehlermeldung ab, falls derartige Ausloggvorgänge häufig auftreten. Es wird dadurch ein ausgeglichener Betrieb ermöglicht, bei dem nicht jede Störung beispielsweise an ein Operation und Maintenance Terminal gemeldet wird. Es soll klar sein, daß der Begriff "fehlerhafte Meldungen" nicht nur falsche Meldungen einschließen soll, sondern auch an sich korrekte Meldungen, die jedoch beispielsweise zu häufig auftreten.

Bei einer vorteilhaften Variante ist vorgesehen, daß bei jedem erzwungenen Ausloggen ein zweiter Zähler inkrementiert wird, und bei Erreichen eines vorgebbaren Zählerstandes innerhalb einer bestimmten Zeitspanne die Fehlermeldung abgegeben wird. Diese Maßnahme führt dazu, daß längere störungsfreie Betriebszeiten zu einem "Vergessen" der aufgetretenen Ausloggvorgänge führen.

Zweckmäßig ist es, wenn die Fehlermeldungen an ein Operation und Maintenance Terminal weitergegeben werden, damit von Überwachungspersonen die weiteren Entscheidungen getroffen werden können.

Das Verfahren nach der Erfindung eignet sich besonders zur Durchführung in einem ISDN-Netz, wobei die Meldungen im D-Kanal gesendet wurden. Dabei werden die Meldungen zweckmäßigerweise an periphere Anschlußgruppen der Vermittlungsstellen gesendet, da in diesen wegen des dort vorhandenen Gruppenprozessors die erforderliche Intelligenz von vorne herein gegeben ist.

Um die erforderlice Fehlererkennung durchführen zu können, haben sich mehrere Kriterien als besonders zweckmäßig gezeigt, wobei diese einzeln oder in Kombination zur Überprüfung verwendet werden können. Beispielsweise ist es vorteilhaft, wenn die Meldungen auf falsche Data-Tag-Identifier überprüft werden, oder wenn die Meldungen auf falsche Message-Block-Typen überprüft werden.

Weiters kann es empfehlenswert sein, wenn die Meldungen dahingehend überprüft werden, ob sie in den D-Kanal-Informationselementen REGISTER und/oder FACILITY einen Abort-Tag enthalten, oder die Meldungen dahingehend überprüft werden, ob sie in den D-Kanal-Informationselementen FACILITY und/oder RELEASE einen Adress-Identification-Tag enthalten, oder die Meldungen dahingehend überprüft werden, ob bei den D-Kanal-Informationselementen REGISTER und/oder FACILITY und/oder RELEASE die Applikationsart definiert ist.

Auch können die Meldungen dahingehend überprüft werden, ob ihre Länge eine vorgebbare Maximallänge übersteigt. Eine solche Maximallänge kann systemintern festgelegt werden, so daß sie Außenstehenden nicht bekannt ist.

Eine weitere empfehlenswerte Variante zeichnet sich dadurch aus, daß überprüft wird, ob mehr als eine vorgebbare Anzahl von Meldungen eines Teilnehmers eintrifft, ohne daß eine vorgesehene Data-Link-Quittung abgewartet wurde.

Auch kann sinnvollerweise überprüft werden, ob die Anzahl der Meldungen je Zeiteinheit ein bestimmtes, vorgebbares Maß übersteigt. Auch diese Anzahl kann systemintern festgelegt werden.

Weiters ist es günstig, wenn überprüft wird, ob die Anzahl der Meldungsverbindungen an dem Port eines Teilnehmers eine bestimmte, vorgebbare Maximalanzahl übersteigt. Dazu ist anzumerken, daß auch die Anzahl solcher Verbindungen - im Rahmen des D-Kanal-Protokolles - intern festgelegt werden kann.

Eine weitere zweckmäßige Ausgestaltung sieht vor, daß überprüft wird, ob die Anzahl der je Zeiteinheit einlangenden D-Kanal-Informationselemente REGISTER eine bestimmte, vorgebbare Maximalanzahl übersteigt.

Auch kann mit Vorteil vorgesehen sein, daß überprüft wird, ob die Anzahl der parallelen Verbindungen an einer peripheren Anschlußgruppe eine bestimmte vorgebbare Maximalanzahl übersteigt.

Die der Erfindung zugrunde liegende Aufgabe läßt sich, ausgehend von einer Vermittlungsstelle der oben genannten Art, auch dadurch lösen, daß jede periphere Anschlußgruppe dazu eingerichtet ist, Meldungen von Teilnehmern, die Mitglieder eines Operatorservice sind, zu überprüfen und auszuwerten, bei Erkennen fehlerhafter Meldungen eine zugehörige Data-Link-Verbindung abzubauen und einen ersten Zähler hochzuzählen, bei Erreichen eines vorgebbaren Grenzwertes des ersten Zählers ein erzwungenes Ausloggen des Teilnehmers durchzuführen und eine Fehlermeldung abzugeben, falls die Anzahl der erzwungenen Ausloggvorgänge innerhalb einer bestimmten Zeitspanne ein vorgebbares Maß überschreitet.

Die erzielbaren Vorteile entsprechen jenen, die bereits im Zusammenhang mit dem Verfahren nach der Erfindung genannt wurden bzw. noch weiter unten erwähnt werden. Sinngemäß gilt dies auch für die wahlweisen Ausgestaltungen der Vermittlungsstelle nach den Ansprüchen 18 bis 32.

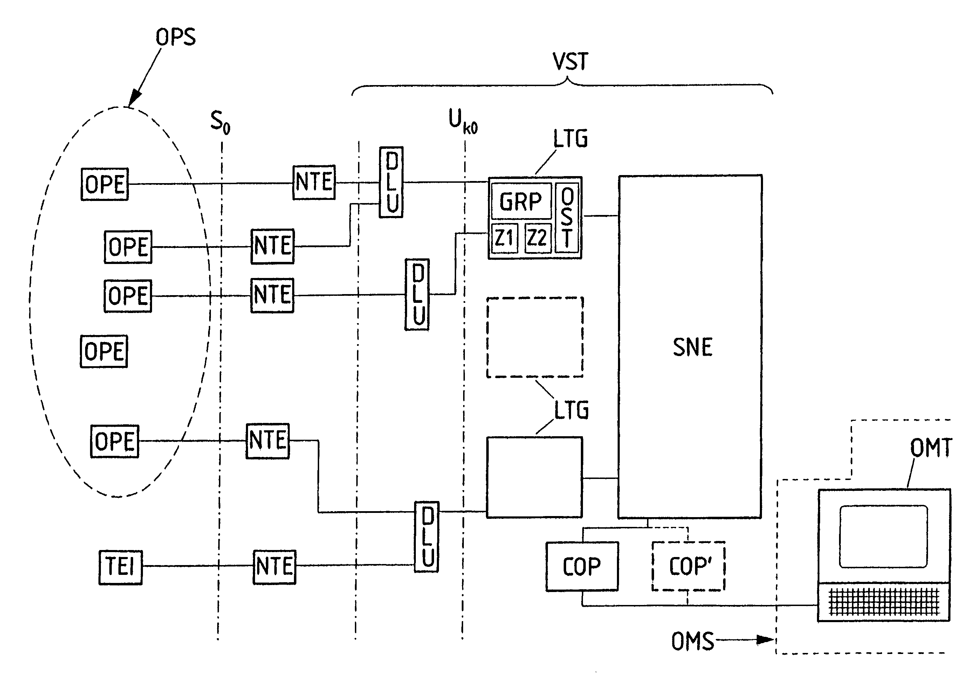

Die Erfindung samt weiteren Vorteilen ist im folgenden anhand einer möglichen Ausführungsform näher erläutert, wobei auf die Zeichnung Bezug genommen wird. In dieser zeigt die einzige Figur den prinzipiellen Aufbau einer Vermittlungsstelle nach der Erfindung in einem vereinfachten Blockschaltbild.

In der Figur erkennt man links einige Teilnehmer OPE eines Operatorsystems OPS, wobei hier nicht auf die Hierarchie innerhalb der Teilnehmer OPE eingegangen wird. Alle Teilnehmer OPE sind neben üblichen Netzteilnehmern TEI eines Telekommunikationsnetzes, im vorliegenden Fall eines ISDN-Netzes, und daher über eine S₀-Schnittstelle in das Netz eingebunden, d.h. hier an einem Netzwerkanschluß NTE angeschlossen.

Eine Vermittlungsstelle VST des Netzes ist rechts gezeigt, und sie besitzt in bekannter Weise ein Koppelnetz SNE und daran angeschlossene periphere Anschlußgruppen LTG. Zur Steuerung der Vermittlungsstelle VST, vor allem des Koppelnetzes SNE, ist ein Koordinationsprozessor COP und gegebenenfalls ein zweiter Koordinationsprozessor COP' vorgesehen. Gleichfalls in bekannter Weise enthält jede periphere Anschlußgruppe LTG einen Gruppenprozessor GRP, und an jede periphere Anschlußgruppe sind bei diesem Ausführungsbeispiel über eine Uₖ₀-Schnittstelle Konzentratoren DLU (Digital Line Unit) angeschlossen. Auch jeder dieser Konzentratoren DLU besitzt mehrere Eingänge für die bereits vorhin genannten Netzwerkanschlüsse. Bei größeren Vermittlungsstellen können an ein Koppelnetz SNE bis zu 512 periphere Anschlußgruppen LTG (Line Trunk Group) angeschlossen sein, und an jede Anschlußgruppe LTG sind üblicherweise zwei Konzentratoren DLU angeschlossen.

In einer peripheren Anschlußgruppe LTG laufen verschiedene Programme ab, die von dem Gruppenprozessor GRP unterstützt werden, z.B. erfolgt hier der größte Teil des Verbindungsaufbaues, die Signalisierung, der Codeempfang, etc. Im allgemeinen werden 70 % des Verbindungsaufbaues in den peripheren Anschlußgruppen durchgeführt, wogegen dem Koordinationsprozessor COP vor allem Routingaufgaben zukommen.

Auch ist in jeder peripheren Anschlußgruppe LTG eine Statustabelle OST enthalten, in welcher spezifische Daten der Teilnehmer, hier der Teilnehmer des Operator-Systems OPS, abgespeichert sind. Solche Daten sind insbesondere die spezifische Identifikation des Teilnehmers, die Ordnungsnummer der zugehörigen peripheren Anschlußgruppe, etc.

Zu der Vermittlungsstelle gehört weiters ein Operation und Maintenance System OMS mit einem Operation und Maintenance Terminal OMT, an dem Überwachungspersonal den Zustand der Vermittlungsstelle ständig beobachten und Fehler erkennen kann.

Die Teilnehmer OPE des Operatorsystems OPS besitzen üblicherweise Arbeitsplätze mit Personalcomputern, die ISDN-Karten und spezielle Software sowie Sprechgarnituren für die Operatoren enthalten. Seitens dieser Teilnehmer OPE können Nachrichten an die Vermittlungsstelle, vor allem an die peripheren Anschlußgruppen LTG gesandt werden, wobei diese Nachrichten im Gruppenprozessor GRP verarbeitet werden und zu entsprechenden weiteren Maßnahmen, z.B. einem Verbindungsaufbau führen. Die Meldungen werden in einer Punkt-zu-Punkt-Konfiguration bei daueraktiver Schicht 2 und in einem ISDN-Netz im D-Kanal gesendet.

Manipulationen, beispielsweise durch Software-Hacker, Fehler in der Software des Operatorsystems OPS oder auch unbeabsichtigte Fehlbedienung durch Operatoren können dazu führen, daß Meldungen in einer Art und Weise bei der Vermittlungsstelle VST eingehen, die deren Funktion ebenso gefährdet, wie die Stabilität des Operatorsystems OPS.

Um diese Gefahr auszuschließen bzw. zu verringern werden die bei der Vermittlungsstelle VST eingehenden Meldungen im D-Kanal in den entsprechenden peripheren Anschlußgruppen LTG auf Fehler der Meldungen oder fehlerhafte Meldungsstrukturen überprüft, und es ist vorgesehen, daß bei Erkennen solcher Fehler die zugehörige Data-Link-Verbindung zu dem Teilnehmer abgebaut wird und gleichzeitig ein erster Zähler Z1 der Anschlußgruppe LTG hochgezählt wird. Falls der erste Zähler einen vorgebbaren Grenzwert erreicht, beispielsweise den Wert 20, wird ein erzwungenes Ausloggen des Teilnehmers OPE durchgeführt, so daß sich ein solcher Teilnehmer erneut anmelden muß, was beispielsweise durch Eingabe eines Identifikationscodes und anderer Größen erfolgen kann, und durch den Gruppenprozessor GRP der Anschlußgruppe LTG durchgeführt und in der Statustabelle OST festgehalten wird. Falls die Anzahl solcher erzwungener Ausloggvorgänge innerhalb einer bestimmten Zeitspanne ein vorgebbares Maß überschreitet, beispielsweise fünf Ausloggvorgänge innerhalb von zehn Minuten, wird eine Fehlermeldung an das Operation und Maintenance System OMS als frei laufende Meldung abgegeben, und eine Bedienungsperson kann diese Meldung sodann an dem Operation und Maintenance Terminal OMT erkennen und für solche Fälle vorgesehene Maßnahmen ergreifen, z.B. eine vollständige Abschaltung des entsprechenden Teilnehmers von der Vermittlungsstelle VST durchführen.

Es ist weiters möglich, einen zweiten Zähler Z2 in der Anschlußgruppe LTG vorzusehen, und diesen Zähler Z2 bei jedem erzwungenen Ausloggen zu inkrementieren, d.h. um eins zu erhöhen. Falls innerhalb einer bestimmten Zeitspanne ein vorgebbarer Zählerstand erreicht wird, wird eine Fehlermeldung abgegeben. Auf jeden Fall wird der Zähler nach Ablauf dieser Zeitspanne auf Null gesetzt, und ein neuer Zählvorgang beginnt.

Was die Art der Fehlererkennung betrifft, so geht es im wesentlichen darum, fehlerhafte Data-Link-Verbindungen bzw. fehlerhafte Verbindungen im allgemeinen zu erkennen, und andererseits eine Überlast an den peripheren Anschlußgruppen zu verhindern bzw. gleichfalls zu erkennen. Es stehen verschiedene Kriterien zur Beurteilung fehlerhafter Zustände zur Verfügung, wobei sich die nachstehend beschriebenen in Verbindung mit der Erfindung besonders zur Auswertung anbieten.

Die Meldungen können durch den Gruppenprozessor dahingehend überprüft werden, ob sie zugelassene Data Tag Identifier enthalten oder nicht, d.h. ob sie falsche Identifier enthalten. Solche Identifier stehen in den einzelnen Tags der Nachrichten zu Beginn, darauf folgt eine Längeninformation und sodann die eigentliche Information. Die Meldungen können auch auf falsche Message Block Typen überprüft werden, oder es kann überprüft werden, ob in den D-Kanal Informationselementen REGISTER und/oder FACILITY Abort-Tag enthalten ist. Ebenso kann überprüft werden, ob in den D-Kanal Informationselementen FACILITY und/oder RELEASE ein Address-Identification-Tag vorhanden ist. Eine weitere Möglichkeit der Überprüfung besteht darin, daß festgestellt wird, ob bei den D-Kanal-Informationselementen REGISTER und/oder FACILITY und/oder RELEASE die Applikationsart definiert ist. Die genannten wesentlichen Einzelheiten über die D-Kanal-Informationselemente sind dem Fachmann bekannt und beispielsweise in dem eingangs genannten Blue Book von Ito bzw. CCITT enthalten.

Die peripheren Anschlußgruppen LTG können eingehende Meldungen weiters dahingehend überprüfen, ob ihre Länge eine vorgegebene Maximallänge übersteigt. Diese Maximallänge kann seitens des Anwenders in einem gewissen Maß selbst definiert werden und muß Außenstehenden nicht bekannt sein. Langen Meldungen ein, die diese Maximallänge übersteigen, so kann davon ausgegangen werden, daß ein Fehler vorliegt, oder die Meldungen von einer nicht autorisierten Stelle einlangen.

Üblicherweise ist bei D-Kanal-Meldungen vorgesehen, daß nach einer bestimmten Anzahl von Meldungen eines Teilnehmers, z.B. zwei Meldungen, eine Data-Link-Quittung an den Teilnehmer abgegeben wird. Es kann dann überprüft werden, ob eine vorgebbare Anzahl von Meldungen eines Teilnehmers eintrifft, ohne daß eine solche Data-Link-Quittung abgewartet wurde.

Weiters kann die Meldungsfrequenz überprüft werden, d.h. die Anschlußgruppe LTG kann überprüfen, ob die Anzahl der Meldungen je Zeiteinheit ein bestimmtes, vorgebbares Maß übersteigt. Neben der Frequenz der einlangenden Meldungen kann auch überprüft werden, ob die Gesamtanzahl der Meldungsverbindungen an dem Port eines Teilnehmers eine bestimmte, gleichfalls vorgebbare Maximalanzahl übersteigt. Diese Zahl ist gleichfalls nur dem Betreiber, nicht jedoch Außenstehenden bekannt.

Die peripheren Anschlußgruppen bzw. deren Gruppenprozessoren können auch überprüfen, ob die Anzahl der je Zeiteinheit einlangenden D-Kanal-Informationselemente REGISTER eine bestimmte, wiederum vorgebbare Maximalanzahl übersteigt, und schließlich kann auch überprüft werden, ob die Anzahl der parallelen Verbindungen an einer peripheren Anschlußgruppe LTG eine bestimmte, vorgebbare Maximalanzahl übersteigt.

Das gemäß der Erfindung erzwungene Ausloggen (Forced Logg Off) eines Teilnehmers bei Erreichen eines vorgegebenen Zählerstandes des ersten Zählers Z1 bewirkt auch immer eine Änderung der Einträge im Gruppenprozessor und in dem Koordinaationsprozessor, so daß nach einem erzwungenen Ausloggen der Teilnehmer OPE des Operatorsystems OPS sich erneut mit Hilfe eines Paßwortes, etc. beim System anmelden muß. Eingriffe von höherer Seite werden allerdings erst dann erwartet, wenn diese Ausloggvorgänge eine bestimmte Anzahl und/oder eine bestimmte Frequenz erreichen. Auf diese Weise ist es möglich, ernsthafte Fehlerzustände rasch zu erkennen und zu melden, ohne jedoch bei gelegentlich auftretenden Fehlern das gesamte System zu gefährden. Je nach Größe und Art des Netzes sowie des Operatorsystems hat es der Fachmann in der Hand, durch Heranziehen geeigneter Kriterien für die Fehlererkennung eine praxisgerechte Anpassung an die jeweilige Situation zu erreichen.

## Patentansprüche

1. Verfahren zur Überprüfung und Auswertung erkannter Fehler von Meldungen einer Mehrzahl von Teilnehmern (OPE) eines Kommunikationsnetzes, die Mitglieder eines Operatorservice (OPS) sind, wobei die Meldungen in einer Punkt-zu-Punkt-Konfiguration bei daueraktiver Schicht 2 von den Teilnehmern an eine Vermittlungsstelle (VST) gesandt werden,
**dadurch gekennzeichnet,**
**daß** bei Erkennen fehlerhafter Meldungen die zugehörige Data-Link-Verbindung abgebaut und ein erster Zähler (Z1) der Anschlußgruppe (LTG) hochgezählt wird,
bei Erreichen eines vorgebbaren Grenzwertes des ersten Zählers ein erzwungenes Ausloggen des Teilnehmers (OPE) durchgeführt, und
eine Fehlermeldung abgegeben wird, falls die Anzahl der erzwungenen Ausloggvorgänge innerhalb einer bestimmten Zeitspanne ein vorgebbares Maß überschreitet.

2. Verfahren nach Anspruch 1,
**dadurch gekennzeichnet, daß** bei jedem erzwungenen Ausloggen ein zweiter Zähler (Z2) der Anschlußgruppe (LTG) inkrementiert wird, und bei Erreichen eines vorgebbaren Zählerstandes innerhalb einer bestimmten Zeitspanne die Fehlermeldung abgegeben wird.

3. Verfahren nach Anspruch 1 oder 2,
**dadurch gekennzeichnet, daß** die Fehlermeldung an ein Operation- und Maintenance-Service (OMS) abgegeben wird.

4. Verfahren nach einem der Ansprüche 1 bis 3,
**dadurch gekennzeichnet, daß** es in einem ISDN-Netz durchgeführt wird und die Meldungen im D-Kanal gesendet werden.

5. Verfahren nach Anspruch 4,
**dadurch gekennzeichnet, daß** die Meldungen an periphere Anschlußgruppen (LTG) der Vermittlungsstelle (VST) gesendet werden.

6. Verfahren nach einem der Ansprüche 3 bis 5,
**dadurch gekennzeichnet, daß** die Meldungen auf falsche Data-Tag-Identifier überprüft werden.

7. Verfahren nach einem der Ansprüche 3 bis 6,
**dadurch gekennzeichnet, daß** die Meldungen auf falsche Message-Block-Typen überprüft werden.

8. Verfahren nach einem der Ansprüche 3 bis 7,
**dadurch gekennzeichnet, daß** die Meldungen dahingehend überprüft werden, ob sie in den D-Kanal-Informationselementen REGISTER und/oder FACILITY einen Abort-Tag enthalten.

9. Verfahren nach einem der Ansprüche 3 bis 8,
**dadurch gekennzeichnet, daß** die Meldungen dahingehend überprüft werden, ob sie in den D-Kanal-Informationselementen FACILITY und/oder RELEASE einen Adress-Identification-Tag enthalten.

10. Verfahren nach einem der Ansprüche 3 bis 9,
**dadurch gekennzeichnet, daß** die Meldungen dahingehend überprüft werden, ob bei den D-Kanal-Informationselementen REGISTER und/oder FACILITY und/oder RELEASE die Applikationsart definiert ist.

11. Verfahren nach einem der Ansprüche 3 bis 10,
**dadurch gekennzeichnet, daß** die Meldungen dahingehend überprüft werden, ob ihre Länge eine vorgegebene Maximallänge übersteigt.

12. Verfahren nach einem der Ansprüche 3 bis 11,
**dadurch gekennzeichnet, daß** überprüft wird, ob mehr als eine vorgebbare Anzahl von Meldungen eines Teilnehmers eintrifft, ohne daß eine vorgesehene Data-Link-Quittung abgewartet wurde.

13. Verfahren nach einem der Ansprüche 3 bis 12,
**dadurch gekennzeichnet, daß** überprüft wird, ob die Anzahl der Meldungen je Zeiteinheit ein bestimmtes, vorgebbares Maß übersteigt.

14. Verfahren nach einem der Ansprüche 3 bis 13,
**dadurch gekennzeichnet, daß** überprüft wird, ob die Anzahl der Meldungsverbindungen an dem Port eines Teilnehmers eine bestimmte, vorgebbare Maximalanzahl übersteigt.

15. Verfahren nach einem der Ansprüche 3 bis 14,
**dadurch gekennzeichnet, daß** überprüft wird, ob die Anzahl der je Zeiteinheit einlangenden D-Kanal-Informationselemente REGISTER eine bestimmte, vorgebbare Maximalanzahl übersteigt.

16. Verfahren nach einem der Ansprüche 3 bis 15,
**dadurch gekennzeichnet, daß** überprüft wird, ob die Anzahl der parallelen Verbindungen an einer peripheren Anschlußgruppe eine bestimmte vorgebbare Maximalanzahl übersteigt.

17. Vermittlungsstelle (VST) für ein Telekommunikationsnetz, mit einem Koppelnetz (SNE), daran angeschlossenen peripheren Anschlußgruppen (LTG) für Teilnehmer (OPE) des Netzes, sowie zumindest einem Koordinationsprozessor (COP, COP'), wobei jede periphere Anschlußgruppe (LTG) einen Gruppenprozessor (GRP) besitzt,
**dadurch gekennzeichnet,**
**daß** jede periphere Anschlußgruppe (LTG) dazu eingerichtet ist, Meldungen von Teilnehmern (OPE), die Mitglieder eines Operatorservice (OPS) sind, zu überprüfen und auszuwerten, bei Erkennen fehlerhafter Meldungen eine zugehörige Data-Link-Verbindung abzubauen und einen ersten Zähler (Z1) der Anschlußgruppe (LTG) hochzuzählen, bei Erreichen eines vorgebbaren Grenzwertes des ersten Zählers ein erzwungenes Ausloggen des Teilnehmers durchzuführen und eine Fehlermeldung abzugeben, falls die Anzahl der erzwungenen Ausloggvorgänge innerhalb einer bestimmten Zeitspanne ein vorgebbares Maß überschreitet.

18. Vermittlungsstelle (VST) nach Anspruch 17,
**dadurch gekennzeichnet, daß** die periphere Anschlußgruppe (LTG) einen zweiten Zähler (Z2) der Anschlußgruppe (LTG) aufweist, welcher bei jedem erzwungenen Ausloggen inkrementiert wird, wobei bei Erreichen eines vorgebbaren Zählerstandes innerhalb einer bestimmten Zeitspanne die Fehlermeldung abgebbar ist.

19. Vermittlungsstelle (VST) nach Anspruch 17 oder 18,
**dadurch gekennzeichnet, daß** sie dazu eingerichtet ist, die Fehlermeldung an ein Operator- und Maintenance-Service (OMS) abzugeben.

20. Vermittlungsstelle (VST) nach einem der Ansprüche 17 bis 19,
**dadurch gekennzeichnet, daß** das Telekommunikationsnetz ein ISDN-Netz ist.

21. Vermittlungsstelle (VST) nach Anspruch 20,
**dadurch gekennzeichnet, daß** die Meldungen an ihre peripheren Anschlußgruppen (LTG) gerichtet sind.

22. Vermittlungsstelle (VST) nach Anspruch 21,
**dadurch gekennzeichnet, daß** die peripheren Anschlußgruppen (LTG) dazu eingerichtet sind, die Meldungen auf falsche Data-Tag-Identifier zu überprüfen.

23. Vermittlungsstelle (VST) nach Anspruch 21 oder 22,
**dadurch gekennzeichnet, daß** die peripheren Anschlußgruppen (LTG) dazu eingerichtet sind, die Meldungen auf falsche Message-Block-Typen zu überprüfen.

24. Vermittlungsstelle (VST) nach einem der Ansprüche 21 bis 23,
**dadurch gekennzeichnet, daß** die peripheren Anschlußgruppen (LTG) dazu eingerichtet sind, die Meldungen dahingehend zu überprüfen, ob sie in den D-Kanal-Informationselementen REGISTER und/oder FACILITY einen Abort-Tag enthalten.

25. Vermittlungsstelle (VST) nach einem der Ansprüche 21 bis 24,
**dadurch gekennzeichnet, daß** die peripheren Anschlußgruppen (LTG) dazu eingerichtet sind, die Meldungen dahingehend zu überprüfen, ob sie in den D-Kanal-Informationselementen FACILITY und/oder RELEASE einen Adress-Identification-Tag enthalten.

26. Vermittlungsstelle (VST) nach einem der Ansprüche 21 bis 25,
**dadurch gekennzeichnet, daß** die peripheren Anschlußgruppen (LTG) dazu eingerichtet sind, die Meldungen dahingehend zu überprüfen, ob bei den D-Kanal-Informationselementen REGISTER und/oder FACILITY und/oder RELEASE die Applikationsart definiert ist.

27. Vermittlungsstelle (VST) nach einem der Ansprüche 21 bis 26,
**dadurch gekennzeichnet, daß** die peripheren Anschlußgruppen (LTG) dazu eingerichtet sind, die Meldungen dahingehend zu überprüfen, ob ihre Länge eine vorgegebene Maximallänge übersteigt.

28. Vermittlungsstelle (VST) nach einem der Ansprüche 21 bis 27,
**dadurch gekennzeichnet, daß** die peripheren Anschlußgruppen (LTG) dazu eingerichtet sind, die Meldungen dahingehend zu überprüfen, ob mehr als eine vorgebbare Anzahl von Meldungen eines Teilnehmers eintrifft, ohne daß eine vorgesehene Data-Link-Quittung abgewartet wurde.

29. Vermittlungsstelle (VST) nach einem der Ansprüche 21 bis 28,
**dadurch gekennzeichnet, daß** die peripheren Anschlußgruppen (LTG) dazu eingerichtet sind, die Meldungen dahingehend zu überprüfen, ob die Anzahl der Meldungen je Zeiteinheit ein bestimmtes, vorgebbares Maß übersteigt.

30. Vermittlungsstelle (VST) nach einem der Ansprüche 21 bis 29,
**dadurch gekennzeichnet, daß** die peripheren Anschlußgruppen (LTG) dazu eingerichtet sind, die Meldungen dahingehend zu überprüfen, ob die Anzahl der Meldungsverbindungen an dem Port eines Teilnehmers eine bestimmte, vorgebbare Maximalanzahl übersteigt.

31. Vermittlungsstelle (VST) nach einem der Ansprüche 21 bis 30,
**dadurch gekennzeichnet, daß** die peripheren Anschlußgruppen (LTG) dazu eingerichtet sind, die Meldungen dahingehend zu überprüfen, ob die Anzahl der je Zeiteinheit einlangenden D-Kanal-Informationselemente REGISTER eine bestimmte, vorgebbare Maximalanzahl übersteigt.

32. Vermittlungsstelle (VST) nach einem der Ansprüche 21 bis 31,
**dadurch gekennzeichnet, daß** die peripheren Anschlußgruppen (LTG) dazu eingerichtet sind, die Meldungen dahingehend zu überprüfen, ob die Anzahl der parallelen Verbindungen an einer peripheren Anschlußgruppe eine bestimmte vorgebbare Maximalanzahl übersteigt.

## Claims

1. Method for checking and evaluating detected message errors of a plurality of operators (OPE) of a communication network which are members of an operator service (OPS), the messages being sent by the operators to an exchange (VST) in a point-to-point configuration with Layer 2 permanently active,
**characterised in that**
when errored messages are detected the associated data link connection is cleared down and a first counter (Z1) of the line trunk group (LTG) is incremented,
when the first counter reaches a predefined limit value, a forced log-off of the operator (OPE) is performed, and
a fault message is output if the number of forced log-offs exceeds a predefined amount within a certain time period.

2. Method according to Claim 1,
**characterised in that** at each forced log-off, a second counter (Z2) of the line trunk group (LTG) is incremented and the fault message is output if a predefined count is reached within a certain time period.

3. Method according to Claim 1 or 2,
**characterised in that** the fault message is output to an Operation and Maintenance Service (OMS).

4. Method according to one of Claims 1 to 3,
**characterised in that** it is implemented in an ISDN network and the messages are transmitted in the D-channel.

5. Method according to Claim 4,
**characterised in that** the messages are sent to peripheral line trunk groups (LTG) of the exchange (VST).

6. Method according to one of Claims 3 to 5,
**characterised in that** the messages are checked for incorrect data tag identifiers.

7. Method according to one of Claims 3 to 6,
**characterised in that** the messages are checked for incorrect message block types.

8. Method according to one of Claims 3 to 7,
**characterised in that** the messages are checked to ascertain whether they contain an abort tag in the D-channel information elements REGISTER and/or FACILITY.

9. Method according to one of Claims 3 to 8,
**characterised in that** the messages are checked to ascertain whether they contain an address identification tag in the D-channel information elements FACILITY and/or RELEASE.

10. Method according to one of Claims 3 to 9,
**characterised in that** the messages are checked to ascertain whether the type of application is defined for the D-channel information elements REGISTER and/or FACILITY and/or RELEASE.

11. Method according to one of Claims 3 to 10,
**characterised in that** the messages are checked to ascertain whether their length exceeds a predefined maximum length.

12. Method according to one of Claims 3 to 11,
**characterised in that** a check is performed to ascertain whether more than predefinable number of messages of an operator is received without waiting for a designated data link acknowledgement.

13. Method according to one of Claims 3 to 12,
**characterised in that** a check is performed to ascertain whether the number of messages exceeds a certain predefinable amount per time unit.

14. Method according to one of Claims 3 to 13,
**characterised in that** a check is performed to ascertain whether the number of message connections at an operator's port exceeds a certain predefinable maximum number.

15. Method according to one of Claims 3 to 14,
**characterised in that** a check is performed to ascertain whether the number of incoming D-channel REGISTER information elements per time unit exceeds a certain predefinable maximum number.

16. Method according to one of Claims 3 to 15,
**characterised in that** a check is performed to ascertain whether the number of parallel connections on a peripheral line trunk group exceeds a certain predefinable maximum number.

17. Exchange (VST) for a telecommunication network, having a switching network (SNE), associated peripheral line trunk groups (LTG) for operators (OPE) in the network, as well as at least one coordination processor (COP, COP'), each peripheral line trunk group (LTG) possessing a group processor (GRP),
**characterised in that** each peripheral line trunk group (LTG) is set up to check and evaluate messages from operators (OPE) which are members of an operator service (OPS), to clear down an associated data link connection and increment a first counter (Z1) of the line trunk group (LTG) if incorrect messages are detected, to implement a forced log-off of the operator if a predefinable limit value of the first counter is reached and to output a fault message if the number of forced log-offs exceeds a predefinable amount within a particular time period.

18. Exchange (VST) according to Claim 17,
**characterised in that** the peripheral line trunk group (LTG) has a second counter (Z2) of the line trunk group (LTG) which is incremented at each forced log-off, the fault message being outputtable if a predefinable count is reached within a particular time period.

19. Exchange (VST) according to Claim 17 or 18,
**characterised in that** it is set up to output the fault message to an Operation and Maintenance Service (OMS).

20. Exchange (VST) according to one of Claims 17 to 19,
**characterised in that** the telecommunication network is an ISDN network.

21. Exchange (VST) according to Claim 20,
**characterised in that** the messages are directed to its peripheral line trunk groups (LTG).

22. Exchange (VST) according to Claim 21,
**characterised in that** the peripheral line trunk groups (LTG) are set up to check the messages for incorrect data tag identifiers.

23. Exchange (VST) according to Claim 21 or 22,
**characterised in that** the peripheral line trunk groups (LTG) are set up to check the messages for incorrect message block types.

24. Exchange (VST) according to one of Claims 21 to 23,
**characterised in that** the peripheral line trunk groups (LTG) are set up to check the messages to ascertain whether they contain an abort tag in the D-channel information elements REGISTER and/or FACILITY.

25. Exchange (VST) according to one of Claims 21 to 24,
**characterised in that** the peripheral line trunk groups (LTG) are set up to check the messages to ascertain whether they contain an address identification tag in the D-channel information elements FACILITY and/or RELEASE.

26. Exchange (VST) according to one of Claims 21 to 25,
**characterised in that** the peripheral line trunk groups (LTG) are set up to check the messages to ascertain whether the type of application is defined for the D-channel information elements REGISTER and/or FACILITY and/or RELEASE.

27. Exchange (VST) according to one of Claims 21 to 26,
**characterised in that** the peripheral line trunk groups (LTG) are set up to check the messages to ascertain whether their length exceeds a predefinable maximum length.

28. Exchange (VST) according to one of Claims 21 to 27,
**characterised in that** the peripheral line trunk groups (LTG) are set up to check the messages to ascertain whether more than one predefinable number of messages of an operator is received without waiting for a designated data link acknowledgment.

29. Exchange (VST) according to one of Claims 21 to 28,
**characterised in that** the peripheral line trunk groups (LTG) are set up to check the messages to ascertain whether the number of messages per time unit exceeds a certain predefinable amount.

30. Exchange (VST) according to one of Claims 21 to 29,
**characterised in that** the peripheral line trunk groups (LTG) are set up to check the messages to ascertain whether the number of message connections at an operator's port exceeds a certain predefinable maximum number.

31. Exchange (VST) according to one of Claims 21 to 30,
**characterised in that** the peripheral line trunk groups (LTG) are set up to check the messages to ascertain whether the number of incoming D-channel REGISTER information elements per time unit exceeds a certain predefinable maximum number.

32. Exchange (VST) according to one of Claims 21 to 31,
**characterised in that** the peripheral line trunk groups (LTG) are set up to check the messages to ascertain whether the number of parallel connections on a peripheral line trunk group exceeds a certain predefinable maximum number.

## Revendications

1. Procédé de vérification et d'exploitation d'erreurs détectées dans des messages d'une pluralité d'abonnés (OPE) d'un réseau de communication qui sont membres d'un service d'opérateur (OPS), les messages étant envoyés dans une configuration point à point dans le cas d'un couche 2 active en continue par les abonnés à un central téléphonique (VST),
**caractérisé en ce que**
la liaison de donnée associée est supprimée et un premier compteur (Z1) du groupe de raccordement (LTG) est incrémenté lorsque l'on détecte des messages erronés,
une déconnexion forcée de l'abonné (OPE) est réalisée lorsqu'une valeur limite prescrite du premier compteur est atteinte, et
un message d'erreur est délivré dans le cas où le nombre de processus de déconnexion forcée pendant un laps de temps déterminé est supérieur à une valeur prescrite.

2. Procédé selon la revendication 1, **caractérisé en ce qu'**un deuxième compteur (Z2) du groupe de raccordement (LTG) est incrémenté à chaque déconnexion forcée et le message d'erreur est délivré lorsqu'un état de compteur prescrit est atteint en un intervalle de temps déterminé.

3. Procédé selon la revendication 1 ou 2, **caractérisé en ce que** le message erroné est délivré à un service d'opération et de maintenance (OMS).

4. Procédé selon l'une des revendications 1 à 3, **caractérisé en ce qu'**il est mis en oeuvre dans un réseau ISDN et **en ce que** les messages sont envoyés dans le canal D.

5. Procédé selon la revendication 4, **caractérisé en ce que** les messages sont envoyés à des groupes de raccordement périphériques (LTG) du central téléphonique (VST).

6. Procédé selon l'une des revendications 3 à 5, **caractérisé en ce que** l'on vérifie dans les messages la présence de faux identifiants d'étiquettes de données.

7. Procédé selon l'une des revendications 3 à 6, **caractérisé en ce que** l'on vérifie dans les messages la présence de faux types de blocs de message.

8. Procédé selon l'une des revendications 3 à 7, **caractérisé en ce que** l'on vérifie les messages pour savoir s'ils contiennent une étiquette d'arrêt dans les éléments d'information de canal D _{REGISTER et/ou FACILITY}.

9. Procédé selon l'une des revendications 3 à 8, **caractérisé en ce que** l'on vérifie les messages pour savoir s'ils contiennent une étiquette d'identification d'adresse dans les éléments d'information de canal D _{FACILITY et/ou RELEASE}.

10. Procédé selon l'une des revendications 3 à 9, **caractérisé en ce que** l'on vérifie les messages pour savoir si le type d'application est défini dans les éléments d'information de canal D _{REGISTER et FACILITY}.

11. Procédé selon l'une des revendications 3 à 10, **caractérisé en ce que** l'on vérifie les messages pour savoir si leur longueur est supérieure à une longueur maximale prescrite.

12. Procédé selon l'une des revendications 3 à 11, **caractérisé en ce que** l'on vérifie s'il y a plus d'un nombre prescrit de messages d'un abonné sans attendre un accusé de réception prévu de la liaison de données.

13. Procédé selon l'une des revendications 3 à 12, **caractérisé en ce que** l'on vérifie si le nombre de messages par unité de temps est supérieur à une valeur déterminée prescrite.

14. Procédé selon l'une des revendications 3 à 13, **caractérisé en ce que** l'on vérifie si le nombre de liaisons de message au niveau du port d'un abonné est supérieur à un nombre maximum déterminé prescrit.

15. Procédé selon l'une des revendications 3 à 14, **caractérisé en ce que** l'on vérifie si le nombre des éléments d'information de canal D _{REGISTER} arrivés par unité de temps est supérieur à un nombre maximum déterminé prescrit.

16. Procédé selon l'une des revendications 3 à 15, **caractérisé en ce que** l'on vérifie si le nombre de liaisons parallèles au niveau d'un groupe de raccordement périphérique est supérieur à un nombre maximum déterminé prescrit.

17. Central téléphonique (VST) pour réseau de télécommunications, comportant un réseau de couplage (SNE) des groupes de raccordement périphériques (LTG) raccordés au réseau de connexion et destinés à des abonnés (OPE) du réseau, ainsi que au moins un processeur de coordination (COP, COP'), chaque groupe de raccordement périphérique (LTG) possédant un processeur de groupe (GRP),
**caractérisé en ce que**
chaque groupe de raccordement périphérique (LTG) est destiné à vérifier et à exploiter des messages d'abonnés (OPE) qui sont membres d'un service d'opérateur (OPS), à supprimer la liaison de donnée associée et à incrémenter un premier compteur (Z1) du groupe de raccordement (LTG) lorsque l'on détecte des messages erronés, à réaliser une déconnexion forcée de l'abonné (OPE) lorsqu'une valeur limite prescrite du premier compteur est atteinte, et à délivrer un message d'erreur dans le cas où le nombre de processus de déconnexion forcée pendant un laps de temps déterminé est supérieur à une valeur prescrite.

18. Central téléphonique (VST) selon la revendication 17, **caractérisée en ce que** le groupe de raccordement périphérique (LTG) comporte un deuxième compteur (Z2) qui est incrémenté à chaque déconnexion forcée, le message d'erreur étant délivré lorsqu'un état de compteur prescrit est atteint pendant un intervalle de temps déterminé.

19. Central téléphonique (VST) selon la revendication 17 ou 18, **caractérisé en ce qu'**il est destiné à délivrer le message d'erreur à un service d'opérateur et de maintenance (OPS).

20. Central téléphonique (VST) selon l'une des revendications 17 à 19 **caractérisé en ce que** le réseau de télécommunications est un réseau ISDN.

21. Central téléphonique (VST) selon la revendication 20, **caractérisé en ce que** les messages sont envoyés à leurs groupes de raccordement périphériques (LTG).

22. Central téléphonique (VST) selon la revendication 21, **caractérisé en ce que** les groupes de raccordement périphériques (LTG) sont destinés à vérifier dans les messages la présence de faux identifiants d'étiquettes de données.

23. Central téléphonique (VST) selon la revendication 21 ou 22, **caractérisé en ce que** les groupes de raccordement périphériques (LTG) sont destinés à vérifier dans les messages la présence de faux types de blocs de message.

24. Central téléphonique (VST) selon l'une des revendications 21 à 23, **caractérisé en ce que** les groupes de raccordement périphériques (LTG) sont destinés à vérifier les messages pour savoir s'ils contiennent une étiquette d'arrêt dans les éléments d'information de canal D _{REGISTER et/ou FACILITY}.

25. Central téléphonique (VST) selon l'une des revendications 21 à 24, **caractérisé en ce que** les groupes de raccordement périphériques (LTG) sont destinés à vérifier les messages pour savoir s'ils contiennent une étiquette d'identification d'adresse dans les éléments d'information de canal D _{FACILITY et/ou} _{RELEASE}.

26. Central téléphonique (VST) selon l'une des revendications 21 à 25, **caractérisé en ce que** les groupes de raccordement périphériques (LTG) sont destinés à vérifier les messages pour savoir si le type d'application est défini dans les éléments d'information de canal D _{REGISTER et FACILITY}.

27. Central téléphonique (VST) selon l'une des revendications 21 à 26, **caractérisé en ce que** les groupes de raccordement périphériques (LTG) sont destinés à vérifier les messages pour savoir si leur longueur est supérieure à une longueur maximale prescrite.

28. Central téléphonique (VST) selon l'une des revendications 21 à 27, **caractérisé en ce que** les groupes de raccordement périphériques (LTG) sont destinés à vérifier les messages pour savoir s'il y a plus d'un nombre prescrit de messages d'un abonné sans attendre un accusé de réception prévu de la liaison de données.

29. Central téléphonique (VST) selon l'une des revendications 21 à 28, **caractérisé en ce que** les groupes de raccordement périphériques (LTG) sont destinés à vérifier les messages pour savoir si le nombre de messages par unité de temps est supérieur à une valeur déterminée prescrite.

30. Central téléphonique (VST) selon l'une des revendications 21 à 29, **caractérisé en ce que** les groupes de raccordement périphériques sont destinés à vérifier les messages pour savoir si le nombre de liaisons de message au niveau du port d'un abonné est supérieur à un nombre maximum déterminé prescrit.

31. Central téléphonique (VST) selon l'une des revendications 21 à 30, **caractérisé en ce que** les groupes de raccordement périphériques (LTG) sont destinés à vérifier les messages pour savoir si le nombre des éléments d'information de canal D _{REGISTER} arrivés par unité de temps est supérieur à un nombre maximum déterminé prescrit.

32. Central téléphonique (VST) selon l'une des revendications 21 à 31, **caractérisé en ce que** les groupes de raccordement périphériques (LTG) sont destinés à vérifier les messages pour savoir si le nombre de liaisons parallèles au niveau d'un groupe de raccordement périphérique est supérieur à un nombre maximum déterminé prescrit.
